# EUROPÄISCHE PATENTSCHRIFT

(11) **EP 0 553 403 B1**
(45) Veröffentlichungstag und Bekanntmachung des Hinweises auf die Patenterteilung: **20.03.1996**
(21) Anmeldenummer: 92118588.0
(22) Anmeldetag: 30.10.1992
(51) Int. Cl.: D21H 19/58

(54) **Papierbeschichtungsmasse**
Paper coating mass
Masse de couchage du papier

(30) Priorität: 02.01.1992 DE 4200017
(43) Veröffentlichungstag der Anmeldung: 04.08.1993
(73) Patentinhaber: HÜLS AKTIENGESELLSCHAFT, D-45764 Marl (DE)
(72) Erfinder: Hahn, Karl, Dr., W-4370 Marl 6 (DE); Schwengers, Hans-Peter, Dr., W-4270 Dorsten 11 (DE); Brehmer, Edgar, W-4270 Dorsten 11 (DE); Grüber, Willi, Dr., W-4358 Haltern 6 (DE)

(56) Entgegenhaltungen:
- Keine einschlaegigen Dokumente gefunden

## Beschreibung

Der Gegenstand der Erfindung betrifft eine Papierbeschichtungsmasse entsprechend dem Oberbegriff des Patentanspruchs 1.

Derartige Papierbeschichtungsmassen werden bereits in der US-A 3 392 048 und der EP-A-0 204 550 beschrieben. Als Bindemittel in diesen Beschichtungsmassen werden vorzugsweise Kunststoffdispersionen auf Basis von Styrol, 1,3-Butadien, Acrylnitril und einer α,β-mcnoethylenisch ungesättigten Carbonsäure eingesetzt. Papierbeschichtungsmassen mit diesen Bindemitteln erfüllen nicht immer die Anforderungen der Praxis. Darüber hinaus gilt Acrylnitril als gefährlicher Arbeitsstoff. In der US-A-3 392 048 werden auch andere Nitrile als Acrylnitril als technische Äquivalente genannt. Diese sind Methacrylnitril, Ethacrylnitril, Maleonitril und Fumaronitril. Die beiden letzteren sind Dinitrile. Sie sind nicht in technischen Mengen verfügbar. Fumaronitril gilt darüber hinaus als gefährlicher Arbeitsstoff.

Ähnliche Papierbeschichtungsmassen werden bereits in der DE-C-3 708 992 beschrieben. Als Bindemittel werden dort u. a. Kunststoffdispersionen auf Basis von Styrol, 1,3-Butadien, 2-Cyanoethylmethacrylat und einer α,β-monoethylenisch ungesättigten Carbonsäure eingesetzt. 2-Cyanoethylmethacrylat spaltet in der Hitze Acrylnitril ab.

Die Aufgabe der Erfindung besteht darin, Papierbeschichtungsmassen bereitzustellen, welche die Nachteile des geschilderten Standes der Technik überwinden und Beschichtungen liefern, welche ein besonders gutes, ausgewogenes Eigenschaftsbild aufweisen. Das beschichtete Papier soll eine gute Naßrupffestigkeit, d.h. niedrige Werte für das Naßrupfen, und zugleich eine gute Farbannahme aufweisen. Es wird also eine hervorragende Bedruckbarkeit gefordert.

Die Aufgabe wurde in überraschender Weise wie in den Patentansprüchen angegeben gelöst.

Gegenstand der vorliegenden Erfindung ist somit eine Papierbeschichtungsmasse, bestehend aus einer wäßrigen Kunststoffdispersion auf Basis einer C₈- bis C₁₂-monovinylaromatischen Verbindung, einer weichmachenden Komponente, ausgewählt aus der Gruppe der C₄- bis C₆-acyclischen, konjugierten Diolefine und der (C₄- bis C₈-Alkyl)(meth)acrylate, einer C₃- bis C₆-α,β-monoethylenisch ungesättigten Carbonsäure und eines α,β-monoethylenisch ungesättigten Nitrils als Bindemittel sowie üblichen Hilfsstoffen, dadurch gekennzeichnet, daß diese als α,β-monethylenisch ungesättigtes Nitril ein Dinitril der allgemeinen Formel I 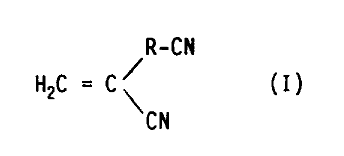 enthält, in welcher R einen geradkettigen oder verzweigten C₁- bis C₁₀-Kohlenwasserstoffrest bedeutet.

Die Dinitrile sind nach literaturbekannten Methoden herstellbar (Synthesis 1985, 10, 969 bis 970; EP 0 295 553; US 3 494 969; FR 1 383 999; J. Chem. Soc. Perkin Trans. (1977) 1 (3), 286 bis 292; SU 250 130-S). Sie sind jedoch z. Z. nicht in technischen Mengen verfügbar. Sie werden in einer Menge von 0,25 bis 15, vorzugsweise 0,5 bis 10 Massen-%, bezogen auf die gesamten Monomeren, eingesetzt.

Besonders bevorzugt enthält die erfindungsgemäße Papierbeschichtungsmasse in der Kunststoffdispersion das α-Methylenglutaronitril.

α-Methylenglutaronitril ist ein Dinitril. Es ist in technischen Mengen vefügbar. Es wird durch katalytische Dimerisation von Acrylnitril erhalten (Hydrocarbon Process. 44, No. 12 (1965), 151 bis 153). Seine Eignung zur Copolymerisation mit radikalisch polymerisierbaren, ethylenisch ungesättigten Monomeren ist seit langem bekannt (J. Polym. Sci., Part B, Polym. Letters, 4, (1966), 849 bis 851).

Die monovinylaromatische Verbindung wird in einer Menge von 15 bis 85, vorzugsweise 20 bis 75 Massen-%, bezogen auf die gesamten Monomeren, eingesetzt. Eine geeignete monovinylaromatische Verbindung ist beispielsweise Styrol.

Die weichmachende Komponente wird in einer Menge von 14 bis 84, vorzugsweise 20 bis 60 Massen-%, bezogen auf die gesamten Monomeren, eingesetzt. Geeignete konjugierte Diolefine sind beispielsweise 1,3-Butadien und Isopren. Geeignete (Meth)acrylate sind beispielsweise n-Butylacrylat und 2-Ethylhexylacrylat.

Die ungesättigte Carbonsäure wird in einer Menge von 0,5 bis 10, vorzugsweise 1 bis 6 Massen-%, bezogen auf die gesamten Monomeren, eingesetzt. Geeignete ungesättigte Carbonsäuren sind beispielsweise (Meth)acrylsäure, Maleinsäure(anhydrid), Fumarsäure, Itaconsäure und Crotonsäure.

Der Kunststoffdispersion können zusätzlich Modifizierungskomponenten zugrundeliegen.

Geeignete Modifizierungskomponenten sind die Amide von C₃- bis C₆ α,β-monoethylenisch ungesättigten Carbonsäuren, wie beispielsweise (Meth)acrylamid, N-Hydroxymethyl(meth)acrylamid und die Mono- und Diamide von Maleinsäure und Fumarsäure. Diese Modifizierungskomponenten werden im allgemeinen in einer Menge von 0,25 bis 5, vorzugsweise 0,5 bis 3 Massen-%, bezogen auf die gesamten Monomeren, eingesetzt.

Weitere geeignete Modifizierungskomponenten sind ethylenisch ungesättigte Sulfonsäuren und deren Salze, wie beispielsweise Natriumvinylsulfonat, Natrium(meth)allylsulfonat, 2-Acrylamido-2-methylpropansulfonsäure, Kalium-3-sulfopropyl(meth)acrylat und Natriumstyrolsulfonat. Diese Modifizierungskomponenten werden im allgemeinen in einer Menge von 0,25 bis 5 Massen-%, bezogen auf die gesamten Monomeren, eingesetzt.

Als Modifizierungskomponente können der Kunststoffdispersion zusätzlich auch α,β-monoethylenisch ungesättigte Nitrile, wie beispielsweise (Meth)acrylnitril, zugrundeliegen.

Weitere geeignete Modifizierungskomponenten sind 2-Hydroxyethyl(meth)acrylat, 2-Hydroxypropyl(meth)acrylat, Butandiol-1,4-monoacrylat, Glycidylmethacrylat, Acrolein, Allylalkohol, Formylstyrol und Methylvinylketon.

Die wäßrige Kunststoffdispersion wird in grundsätzlich bekannter Weise durch Polymerisation der Monomeren in wäßriger Phase als Dispersionsmedium in Gegenwart eines radikalischen Initiators oder eines aus einem radikalischen Initiator und einem wasserlöslichen Reduktionsmittel bestehenden Initiatorsystems und üblicher Polymerisationshilfsmittel erhalten. Die Polymerisation kann in Batchfahrweise oder semikontinuierlich durchgeführt werden. In letzterem Fall kann das Dinitril in die Vorlage gegeben oder zusammen mit den anderen Monomeren dosiert werden. Die Dosierung des Dinitrils kann sich auf einen Teil der Dosierzeit der Monomeren, beispielsweise auf das letzte Drittel, beschränken. Die Polymerisation kann stufenweise durchgeführt werden, so daß Kunststoffteilchen mit unterschiedlicher Zusammensetzung von Kern und Schale erhalten werden. Bei der semikontinuierlichen Polymerisation kann ein Saatlatex vorgelegt werden. Er kann in situ erzeugt sein.

Die radikalischen Initiatoren können wasserlöslich oder monomerlöslich sein. Geeignete wasserlösliche Initiatoren sind Peroxodisulfate und Wasserstoffperoxid. Geeignete monomerlösliche Initiatoren sind organische Peroxide und organische Hydroperoxide.

Die radikalischen Initiatoren können in Kombination mit einem wasserlöslichen Reduktionsmittel eingesetzt werden. Zusätzlich können Schwermetallsalze als Aktivatoren eingesetzt werden.

Als Polymerisationshilfsmittel sind ionische und nichtionische Emulgatoren zu nennen. Geeignete ionische Emulgatoren sind Alkansulfonate, Alkylbenzolsulfonate, Alkyldiphenylether(di)sulfonate, Sulfosuccinate, Alkylsulfate, Alkylpolyalkoxysulfate und Alkylphenolpolyalkoxysulfate. Geeignete nichtionische Emulgatoren sind Alkylethoxylate und Alkylphenolethoxylate.

Weitere Polymerisationshilfsmittel sind Phosphate, stickstoffhaltige Komplexbildner und Molekulargewichtsregler. Geeignete Regler sind beispielsweise Dodecanthiole, Thioglykolsäureester, Tetrachlormethan und Tibrommethan.

In Papierbeschichtungsmassen enthaltene, übliche Hilfsstoffe sind beispielsweise Clay und Carboxymethylcellulose.

Die Erfindung wird durch die folgenden Beispiele erläutert. Darin bedeuten Teile (T.) Massenteile und Prozent (%) Massenprozent, falls nicht anders angegeben. Die nicht erfindungsgemäßen Vergleichsbeispiele werden mit großen Buchstaben bezeichnet.

### Herstellung der wäßrigen Kunststoffdispersionen

### Beispiel 1

In einem Druckreaktor wurden 58 T. vollentsalztes Wasser, 0,01 T. Ammoniumperoxodisulfat, 0,05 T. K₃ PO₄, 0,01 T. des Tetranatriumsalzes der Ethylendiamintetraessigsäure und 0,15 T. eines handelsüblichen Natriumsalzes eines sulfatierten ethoxylierten Nonylphenols (Ethylenoxid/Nonylphenol = 13/1) zusammengegeben. Der Reaktorinhalt wurde auf 85 °C aufgeheizt. Dann wurden 5 % eines ersten Gemisches aus 59 T. Styrol, 35 T. 1,3-Butadien, 1 T. α-Methylenglutaronitril und 1 T. tert.-Dodecylmercaptan sowie 5 % einer Lösung von 4 T. Acrylsäure, 1 T. Acrylamid und 0,74 T. des oben angegebenen Emulgators in 20 T. Wasser (zweites Gemisch) zugegeben. Anschließend wurde mit der gleichmäßigen Zugabe einer Lösung von 1 T. Ammoniumperoxodisulfat in 34 T. Wasser begonnen. Nach 1 Std. wurde mit der gleichmäßigen Zugabe der restlichen Mengen des ersten und des zweiten Gemisches begonnen. Nach weiteren 5 Std. war die Monomerzugabe beendet. Nach einer weiteren Std., d. h. nach insgesamt 7 Std., war die Initiatorzugabe beendet. Die Polymerisation wurde in weiteren 3 Std. zu Ende geführt. Die erhaltene Dispersion wurde durch Filtration von groben Anteilen getrennt, durch Eindampfen entmonomerisiert, mit Natronlauge auf den pH-Wert 7,0 eingestellt und einer Feinfiltration unterworfen. Die so fertiggestellte Dispersion wurde wie in der folgenden Tabelle angegeben charakterisiert.

### Beispiele 2, 3 und A bis D

Das Beispiel 1 wurde hinsichtlich der Monomerzusammensetzung wie in der Tabelle angegeben abgewandelt. Die erhaltenen Dispersionen wurden wie in der Tabelle angegeben charakterisiert.

### Beispiel 4

Das Beispiel 1 wurde wiederholt; jedoch wurden 8 % eines ersten Gemisches aus 42 T. Styrol, 22 T. 1,3-Butadien und 0,6 T. tert.-Dodecylmercaptan sowie 5 % einer Lösung von 4 T. Acrylsäure, 1. T. Acrylamid und 0,85 T. des im Beispiel 1 angegebenen Emulgators in 20 T. Wasser (zweites Gemisch) zugegeben. Anschließend wurde mit der Zugabe des Initiators begonnen. Nach 1 Std. wurde mit der gleichmäßigen Zugabe der restlichen Mengen des ersten und des zweiten Gemisches begonnen. Nach weiteren 3 Std. war die Zugabe des ersten Gemisches beendet und wurde mit der gleichmäßigen Zugabe eines dritten Gemisches aus 18 T. Styrol, 12 T. 1,3-Butadien, 1 T. α-Methylenglutaronitril und 0,4 T. tert.-Dodecylmercaptan begonnen. Nach weiteren 2 Std. waren die Zugabe des dritten Gemisches und die Zugabe des zweiten Gemisches beendet. Nach einer weiteren Std., d. h. nach insgesamt 7 Std., war die Initiatorzugabe beendet. Das weitere Vorgehen entsprach dem Beispiel 1. Die Dispersion wurde wie in der Tabelle angegeben charakterisiert.

### Beispiele 5 und 6

Das Beispiel 4 wurde hinsichtlich der Monomerzusammensetzung wie in der Tabelle angegeben abgewandelt, und zwar betrafen die Abwandlungen nur das dritte Gemisch. Die erhaltenen Dispersionen wurden wie in der Tabelle angegeben charakterisiert.

### Herstellung der Papierbeschichtungsmassen

Die Papierbeschichtungsmassen (Papierstreichfarben) wurden unter Verwendung der oben erhaltenen, wäßrigen Kunststoffdispersionen als Bindemittel gemäß folgender Rezeptur hergestellt:
wäßrige Kunststoffdispersion mit 10 T. Feststoff
100 T. Clay
1 T. Carboxymethylcellulose

Der Feststoffgehalt wurde mit Wasser auf 60 % und der pH-Wert mit Natronlauge auf 8,5 eingestellt.

Mit den so erhaltenen Streichfarben wurde holzfreies Rohpapier (70 g/m) mittels Blade bei einer Streichgeschwindigkeit von 150 m/min gestrichen. Das Auftragsgewicht lag bei 15 g/m. Das gestrichene Papier wurde mit einem Dreiwalzenkalander bei einem Liniendruck von 50 KN/m satiniert.

Die gestrichenen Papiere wurden nach literaturbekannten Prüfmethoden (DE-PS 3 708 992) wie in der Tabelle angegeben charakterisiert.

Um eine gute Bedruckbarkeit zu erzielen, ist es notwendig, daß das Farbabstoßen (naß) und zugleich das Naßrupfen möglichst gering sind, d. h., daß die prozentualen Anteile möglichst niedrige Werte aufweisen.

Die Ergebnisse der Druckprüfungen zeigen, daß die erfindungsgemäßen Kunststoffdispersionen zu Strichqualitäten führen, die hinsichtlich der Trockenrupffestigkeit, entsprechend niedrigen Werten für das Trockenrupfen, und des Farbabstoßens (naß) mit Beschichtungen vergleichbar sind, die mit Kunststoffdispersionen des Standes der Technik erzielt werden.

Im Beispiel 3 wurde mit 3 T. Dinitril ein Naßrupfen von 23 % erzielt, während im Beispiel B mit 3 T. Acrylnitril ein Naßrupfen von 51 % erzielt wurde. Somit wurde unter vergleichbaren Bedingungen hinsichtlich der Nitrilgruppen im erfindungsgemäßen Beispiel 3 eine deutliche Verbesserung der Naßrupffestigkeit, entsprechend einem besonders niedrigen Wert für das Naßrupfen, erzielt. Bei geeigneter Gegenüberstellung der übrigen Beispiele kommt man zu einer ähnlichen Feststellung.

Zusammenfassend ist festzustellen, daß mit den erfindungsgemäßen Papierbeschichtungsmassen eine verbesserte Bedruckbarkeit der gestrichenen Papiere erzielt werden kann.

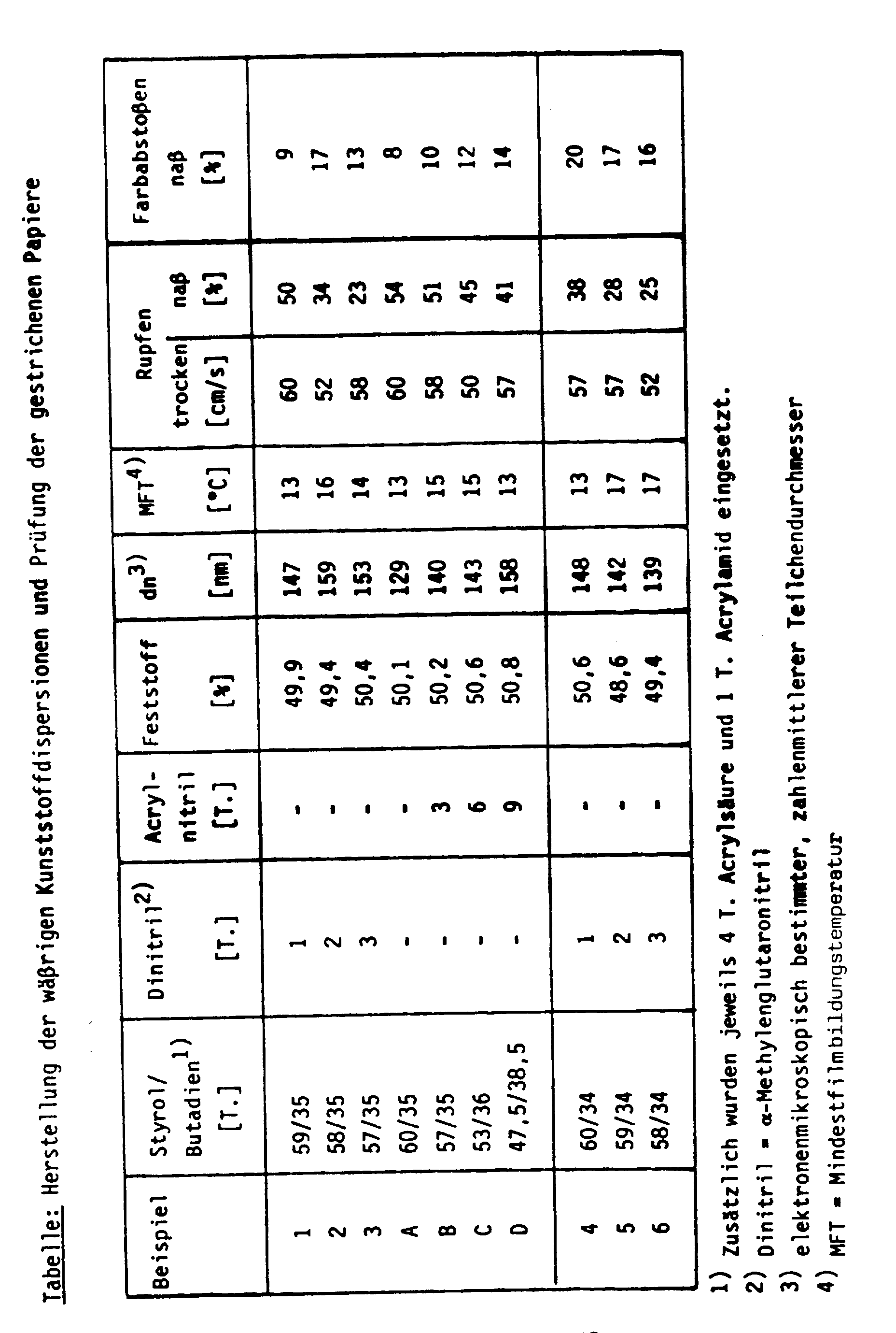

## Patentansprüche

1. Papierbeschichtungsmasse, bestehend aus einer wäßrigen Kunststoffdispersion auf Basis einer C₈- bis C₁₂-monovinylaromatischen Verbindung, einer weichmachenden Komponente, ausgewählt aus der Gruppe der C₄- bis C₆-acyclischen, konjugierten Diolefine und der (C₄- bis C₈-Alkyl)-(meth)acrylate, einer C₃- bis C₆-α,β-monoethylenisch ungesättigten Carbonsäure und eines α,β-monoethylenisch ungesättigten Nitrils als Bindemittel sowie üblichen Hilfsstoffen,
dadurch gekennzeichnet, dass diese als α,β-monethylenisch ungesättigtes Nitril ein Dinitril der allgemeinen Formel I 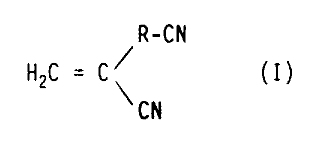 enthält, in welcher R einen geradkettigen oder verzweigten C₁- bis C₁₀-Kohlenwasserstoffrest bedeutet.

2. Papierbeschichtungsmasse nach Anspruch 1,
dadurch gekennzeichnet, daß die Kunststoffdispersion das α-Methylenglutaronitril enthält.

3. Papierbeschichtungsmasse nach den Ansprüchen 1 oder 2,
dadurch gekennzeichnet, daß der Kunststoffdispersion 15 bis 85 Massen-% der monovinylaromatischen Verbindung, 14 bis 84 Massen-% der weichmachenden Komponente, 0,5 bis 10 Massen-% der ungesättigten Carbonsäure und 0,25 bis 15 Massen-% des Dinitrils, jeweils bezogen auf die gesamten Monomeren, zugrunde liegen.

4. Papierbeschichtungsmasse nach Anspruch 3,
dadurch gekennzeichnet, daß der Kunststoffdispersion 20 bis 75 Massen-% Styrol, 20 bis 60 Massen-% einer weichmachenden Komponente aus der Gruppe 1,3-Butadien und n-Butylacrylat, 1 bis 6 Massen-% einer ungesättigten Carbonsäure aus der Gruppe Acrylsäure, Methacrylsäure und Fumarsäure und 0,5 bis 10 Massen-% des Dinitrils, jeweils bezogen auf die gesamten Monomeren, zugrunde liegen.

5. Papierbeschichtungsmasse nach einem der Ansprüche 1 bis 4,
dadurch gekennzeichnet, daß die Kunststoffdispersion durch semikontinuierliche Polymerisation erhalten worden ist.

## Claims

1. Paper-coating composition, consisting of an aqueous plastics dispersion based on a C₈- to C₁₂- monovinyl aromatic compound, a plasticizing component, selected from the group of the C₄- to C₆-acyclic, conjugated diolefins and the (C₄- to C₈-alkyl)-(meth)acrylates, a C₃- to C₆-α,β-monoethylenically unsaturated carboxylic acid and an α,β-monoethylenically unsaturated nitrile as binding agent plus usual auxiliaires, characterized in that this contains, as α,β-monoethylenically unsaturated nitrile, a dinitrile of the general formula I 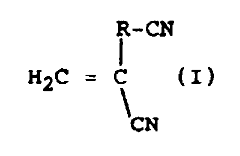 in which R stands for a straight-chained or branched C₁- to C₁₀-hydrocarbon radical.

2. Paper-coating composition according to claim 1, characterized in that the plastics dispersion contains the α-methyleneglutaronitrile.

3. Paper-coating composition according to claims 1 or 2, characterized in that the plastics dispersion is based on 15 to 85 mass-% of the monovinyl aromatic compound, 14 to 84 mass-% of the plasticizing component, 0.5 to 10 mass-% of the unsaturated carboxylic acid and 0.25 to 15 mass-% of the dinitrile, each relative to the total monomers.

4. Paper-coating composition according to claim 3, characterized in that the plastics dispersion is based on 20 to 75 mass-% styrene, 20 to 60 mass-% of a plasticizing component from the group 1,3-butadiene and n-butyl acrylate, 1 to 6 mass-% of an unsaturated carboxylic acid from the group acrylic acid, methacrylic acid and fumaric acid and 0.5 to 10 mass-% of the dinitrile, each relative to the total monomers.

5. Paper-coating composition according to one of claims 1 to 4, characterized in that the plastics dispersion has been obtained by semi-continuous polymerization.

## Revendications

1. Masses d'enduction pour papier, formées d'une dispersion aqueuse de matière plastique à base d'un composé monovinylaromatique en C₈ à C₁₂, un composant plastifiant, choisi parmi le groupe des dioléfines conjuguées acycliques en C₄ à C₆, et des (meth)acrylates d'alcoyle en C₄ à C₈, d'un acide carboxylique non saturé monoéthyléniquement en α, β et d'un nitrile non saturé monoéthyléniquement, en tant qu'agent liant ainsi que des adjuvants usuels,
caractérisées en ce que celles-ci contiennent en tant que nitrile non saturé α, β-monoéthyléniquement un dinitrile de formule générale I, 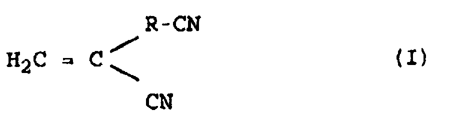 dans laquelle R signifie un reste hydrocarboné à chaîne droite ou ramifié ayant de C₁ à C₁₀.

2. Masses d'enduction pour papier, selon la revendication 1, caractérisées en ce que la dispersion de matière plastique contient de l'α-méthyléneglutaronitrile.

3. Masses d'enduction pour le papier selon les revendications 1 ou 2, caractérisées en ce qu'à la dispersion de matière plastique, appartiennent 15 à 85 % en masse du composé monovinyl aromatique, 14 à 84 % en masse du composant plastifiant, 0,5 à 10 % en masse de l'acide carboxylique non saturé et 0,25 à 15 % en masse du dinitrile, à chaque fois rapporté aux monomères totaux.

4. Masses d'enduction pour papier selon la revendication 3, caractérisées en ce qu'à la dispersion de matière plastique, appartiennent 20 à 75 % en masse de styrène, 20 à 60 % en masse d'un composant plastifiant choisi dans le groupe du 1,3-butadiène et de l'acrylate de n-butyle, 1 à 6 % en masse d'un acide carboxylique non saturé choisi dans le groupe de l'acide acrylique, de l'acide méthacrylique et de l'acide fumarique et 0,5 à 10 % en masse de dinitrile, à chaque fois rapporté aux monomères totaux.

5. Masses d'enduction pour papier selon l'une des revendications 1 à 4, caractérisées en ce que la dispersion de matière plastique a été obtenue par polymérisation en semi-continu.
